(19) Europäisches Patentamt
European Patent Office
Office européen des brevets

(11) EP 4 357 388 A1

(12) # EUROPEAN PATENT APPLICATION
published in accordance with Art. 153(4) EPC

(43) Date of publication:
**24.04.2024 Bulletin 2024/17**

(21) Application number: **22824358.0**

(22) Date of filing: **15.06.2022**

(51) International Patent Classification (IPC):
***C08G 63/08*** *(2006.01)* ***C08G 63/81*** *(2006.01)*
***C08L 67/02*** *(2006.01)*

(52) Cooperative Patent Classification (CPC):
Y02W 90/10

(86) International application number:
**PCT/ES2022/070377**

(87) International publication number:
**WO 2022/263699 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021 ES 202130557**

(71) Applicant: **INSTITUTO TECNOLÓGICO DEL EMBALAJE, TRANSPORTE Y LOGÍSTICA (ITENE)**
**46980 Paterna (ES)**

(72) Inventors:
- **JIMÉNEZ PARDO, María José**
  **46980 PATERNA (ES)**
- **SÁNCHEZ BALLESTER, Soraya Carmen**
  **46980 PATERNA (ES)**
- **GALLUR BLANCA, Miriam**
  **46980 PATERNA (ES)**

(74) Representative: **ZBM Patents - Zea, Barlocci & Markvardsen**
**Rambla Catalunya, 123**
**08008 Barcelona (ES)**

(54) **TRIBLOCK COPOLYMER, COMPOSITIONS COMPRISING SAME AND METHODS FOR PRODUCING SAID COMPOSITIONS**

(57) The present invention relates to new biodegradable triblock copolymers of formula PLLA-b-PBS-b-PLLA and compositions comprising them, which are suitable as raw materials for the preparation of containers for food use. In particular biodegradable polymeric compositions of PBS and PLA. The invention also describes a method of synthesis of the triblock copolymer.

EP 4 357 388 A1

## Description

This application claims the right of priority of Spanish patent application P202130557 filed on 16 June 2021.

The present invention relates to triblock copolymers of polybutylene succinate and polylactic acid and to biodegradable plastic matrices of polybutylene succinate comprising the triblock copolymer. It also relates to methods for copolymer synthesis and methods for preparing polymeric matrices with triblock copolymer as an additive.

STATE OF THE ART

Biodegradable plastic polymers have become products of great interest on the market for the purpose of reducing the environmental impact. These polymers can be perfectly used in most sectors in which non-biodegradable plastics have been used for decades and, advantageously, they can then be degraded by microorganisms. Many of these biodegradable polymers are polysaccharides, such as starch, chitin, chitosan or cellulose. Others are aliphatic polyesters of polylactic acid (PLA), polyhydroxyalkanoates (PHA), poly-ε-caprolactones (PCL), polybutylene succinate (PBS) and copolymers thereof.

One of the major sectors in which biodegradable polymers are very useful is obviously that of packaging and production of containers to contain all types of products, in particular food products. These packaging and containers require specific mechanical properties to adequately contain any content for which they have been designed, as well as suitable barrier properties to gases (such as oxygen) and water vapor, to extend the shelf-life of said content.

It is well known that each homopolymer has properties in relation to thermal stability, mechanical properties, and barrier properties in containers. It is also known that the copolymerization of different monomers modifies these properties.

Thus, some documents describe the synthesis of copolymers and analyze the properties obtained. An example of this are documents that describe, for example, the synthesis of copolymers of polybutylene succinate (PBS) and polylactic acid (PLA), and that also describe mixtures of PBS and PLA to which P(BS-co-LA) copolymers are added. The objective of this is that when adding the aforementioned copolymer to a mixture of PBS and PLA, they improve the mechanical properties of the mixture. Thus, the paper by Zhang et al., "Copolymer P(BS-co-LA) Enhanced Compatibility of PBS/PLA Composite", Journal of Polymers and the Environment, 2018, doi.org/10.1007/s10924-018-1180-0. Zhang *et al.,* describes the synthesis of block and random copolymers of PBS and PLA, where block copolymerization is carried out by condensation of previously synthesized blocks of PBS and PLA. These copolymers allowed the PLA and PBS of a mixture to be more compatible, reducing the drawbacks of these mixtures without additive.

It is also widely known that PLA, which is synthesized using materials derived from the fermentation of sugars, is a rigid plastic with mechanical properties similar to polypropylene (PP). However, PLA is very fragile. Polylactic acid (PLA) can be found in three different forms: two optically pure forms, poly-L-lactic acid (PLLA) and poly-D-lactic acid (PDLA); and a form with no or very reduced optical activity, known as poly-D,L-lactic acid (PDLLA). PLLA acid is the product resulting from the polymerization of L-lactide.

Polybutylene succinate (PBS), in turn, is a biodegradable thermoplastic polymer also having properties comparable to those of polyethylene (PE). It is obtained from succinic acid and 1,4-butanediol by esterification and subsequent condensation of the ester, which gives rise to a bifunctional polymer with two hydroxyls at its ends. High molecular weight PBS has a melting point of around 117°C and a glass transition temperature of around - 40°C.

Despite the existence of copolymers with these two materials, there is still a need for alternative copolymers and mixtures thereof with other polymers that allow shaping the mechanical, thermal and barrier characteristics to be used in different sectors of the industry and, in particular, in the packaging sector.

There is also a need for methods for the synthesis of copolymers that are simple (and therefore cost-effective), reproducible and at the same time give rise to copolymeric compositions that are homogeneous in terms of molecular weights, making them more predictable in their mechanical, thermal, barrier, etc., behavior, or as additives in other biodegradable polymeric compositions.

DESCRIPTION OF THE INVENTION

The inventors have found that by adding an additive consisting of a block copolymer of PBS with poly(L-lactide), PLLA-b-PBS-b-PLLA to a matrix of biodegradable polymer PBS, the resulting mixtures make it possible to achieve improved properties with respect to the PBS biopolymeric matrix without the additive.

More specifically, they achieve improved properties in relation to gas and water vapor barrier; and in relation to mechanical properties, such as thermal stability, elasticity (elastic modulus/Young's modulus), which are critical for the use of the mixtures as containers, in particular for containers intended to contain food products.

They have also found that by adding an additive consisting of a block copolymer of PBS with poly(L-lactide), PLLA-b-PBS-b-PLLA, to a matrix of biodegradable polymer PLA, the resulting mixtures also make it possible to achieve

improved properties with respect to the PLA biopolymeric matrix without the additive. More specifically, they achieve improved properties in relation to mechanical properties, such as thermal stability, or elongation at break.

Thus, a first aspect of the invention relates to a triblock copolymer of poly-L-lactide with polybutylene succinate of formula PLLA-b-PBS-b-PLLA, characterized in that it has a number average molecular weight (Mn) of 4000 g/mol to 200000 g/mol; and in that the PBS block has a number average molecular weight (Mn) of 1500 g/mol to 40000 g/mol; wherein Mn is calculated by gel permeation chromatography (GPC). This PBS block is also referred to throughout this description as PBS oligomer.

In a particular embodiment of the triblock copolymer, this copolymer is characterized in that it has an Mn of 6000 g/mol to 150000 g/mol. Even more particularly, the Mn of the triblock copolymer is 10000 g/mol to 100000 g/mol. More particularly, it is selected from 10,000, 20,000, 30,000, 40,000, 50,000, 60,000, 70,000, 80,000, 90,000 and 100,000 g/mol.

In another particular embodiment of the triblock copolymer according to the first aspect, the PBS block has an Mn of 2500 g/mol to 25000 g/mol, more particularly 4000 g/mol to 10000 g/mol. More particularly selected from 4000, 5000, 6000, 7000, 8000, 9000 and 10000 g/mol.

In another particular embodiment of the triblock copolymer of the first aspect, each of the PLLA blocks has an Mn of 1500 g/mol to 80000 g/mol. In another more particular embodiment, each of the PLLA blocks has an Mn of 2500 g/mol to 40000 g/mol, more particularly 4000 g/mol to 20000 g/mol. Still more particularly the Mn of the PLLA block is selected from 4000, 6000, 8000, 10000, 12000, 14000, 16000, 18000 and 20000 g/mol.

In other more particular embodiments, any of the values of Mn of the PBS and Mn block of each of the PLLA blocks of the particular embodiments are also combinable. Therefore, in a particular embodiment the Mn of the PBS block is 1500 g/mol to 40000 g/mol, or 2500 g/mol to 25000 g/mol, or 4000 g/mol to 10000 g/mol; and the Mn of each of the PLLA blocks is 1500 g/mol to 80000 g/mol, or 2500 g/mol to 40000 g/mol, or 4000 g/mol to 20000 g/mol.

The triblock copolymer according to this first aspect can also be represented by formula (I)

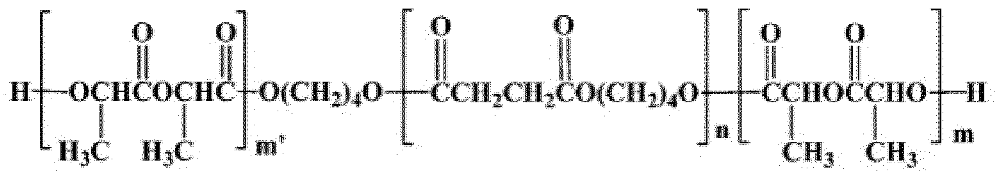

Formula (I);

Wherein:

- *m,* and *m'* are, independently, numbers (values) ranging from 10 to 555, and
- *n* is a number ranging from 9 to 232.

In a particular embodiment of the triblock copolymer of the first aspect when defined by Formula (I), n is a value of 15 to 145, more particularly a value of 23 to 58.

In another particular embodiment of the triblock copolymer of the first aspect when defined by Formula (I), m y m' are, independently, values ranging from 17 to 278, more particularly 28 to 139.

In other more particular embodiments, any of the values of n and m and *m'* indicated in the particular embodiments are also combinable. Therefore, in a particular embodiment m and m' are, independently, values of 17 to 278 or 28 to 139; and n takes a value of 15 to 145 or 23 to 58.

In another particular embodiment, *m*, and *m*' are equal or differ by no more than 10% and take any of the values indicated above. For example, if *m* is 100, *m'* will have a value of 90 to 110.

These values can be calculated using techniques such as nuclear magnetic resonance (NMR), or from the values of Mn. In any case, these values (m, m' and n) combined are those associated with the Mn mentioned above.

The terms "number average molecular weight", "number average molar mass" and their abbreviated form "Mn" have the same meaning and are used interchangeably. The Mn value is one way to determine the molecular mass of a polymer. Polymer molecules, even those of the same type, They have different sizes (chain lengths for linear polymers), thus the average molecular mass will depend on the method to calculate such average. The number average molecular weight is the arithmetic mean or average of the molecular masses of the individual macromolecules. It is calculated by measuring the molecular mass of *n* polymer molecules, adding their masses, and dividing by *n.* $Mn = (\Sigma_i N_i M_i)/ \Sigma_i N_i = \Sigma n_i M_i$. It is calculated using the following formula:

$$\bar{M}_n = \frac{\sum_i N_i M_i}{\sum_i N_i}$$

where Ni is the number of molecules of molecular mass Mi

The number average molecular weight of a polymer can be determined by gel permeation chromatography (GPC), by viscometry using the Mark-Houwink equation, by colligative methods such as vapor pressure osmometry, and by terminal group or proton nuclear magnetic resonance (NMR). As mentioned above, for the purpose of this invention the value of Mn is measured by GPC.

The values *m, m' and n* in the compound of formula (I) can then be calculated from this Mn.

Thus, *m* and *m'* are the degree of polymerization of each PLLA block, respectively. *m* and *m'* are defined as the number of monomer units in each PLLA block. They are calculated as the ratio of the average molecular weight (Mn) of each block (PLLA or PLLA') and the molecular weight of the repeat unit:

$$m = M_{n(PLLA)}/M_{0(PLLA)}$$

$$m' = M_{n(PLLA')}/M_{0(PLLA')}.$$

where Mn is the number average molecular weight of the PLLA (or PLLA') block and $M_0$ is the molecular weight of the repeat unit or monomer in PLLA (or PLLA').

n is the degree of polymerization of the polybutylene succinate (PBS) block, and is defined as the number of monomer units in the PBS block. It is calculated as the ratio of the average molecular weight (Mn) of the PBS block and the molecular weight of the repeat unit:

$$n = M_{n(PBS)}/M_{0(PBS)},$$

where Mn is the number average molecular weight of the PBS block and $M_0$ is the molecular weight of the repeat unit.

See Rudin, A. et al. "The elements of polymer science and engineering (third edition)". Chapter 1- introductory concepts and definitions. Academic press, 2013, pages 1-62.

In another particular embodiment of the triblock copolymer, it is characterized in that the weight ratio between the PBS oligomer block and the PLLA blocks is 1:2 to 1:5 PBS:PLLA(s). More particularly, the weight ratio between the PBS oligomer block and the PLLA blocks is selected from 1:5, 1:4, 1:3, and 1:2 PLLA(s):PBS.

This weight ratio can also be expressed as PLLA:PBS:PLLA if each of the PLLA blocks is counted as an independent block. As such, in a particular embodiment, the triblock copolymer is characterized in that the weight ratio between the PBS oligomer block and each of the PLLA blocks, PLLA:PBS:PLLA, is 1:1:1: to 2.5:1:2.5.

In another particular embodiment, the weight ratio is 2.5:1:2.5 PLLA:PBS:PLLA (i.e., when the PBS:PLLA(s) ratio is 1:5). In another particular embodiment, the weight ratio is 2:1:2 PLLA:PBS:PLLA (i.e., when the PBS:PLLA(s) ratio is 1:4). Also in another particular embodiment, the weight ratio is 1.5:1:1.5 (i.e., when the PBS:PLLA(s) ratio is 1:3). Also in another particular embodiment, the weight ratio is 1:1:1 (i.e., when the PBS:PLLA(s) ratio is 1:2).

In another particular embodiment, the triblock copolymer is characterized in that it has a weight average molecular weight (Mw) of 7000 g/mol to 400000 g/mol, wherein Mw is calculated by gel permeation chromatography (GPC).

In another particular embodiment of the triblock copolymer, this copolymer is characterized in that it has an Mw of 10000 g/mol to 300000 g/mol. Even more particularly, the Mw of the triblock copolymer is 15000 g/mol to 200000 g/mol. More particularly, it is selected from 15000, 30000, 50000, 70000, 90000, 100000, 120000, 140000, 160000 and 180000 g/mol.

The terms "weight average molecular weight", "mass average molar mass", "weight average molar mass" and the abbreviation "Mw" have the same meaning and are interchangeable according to this description. Mw is another way to describe the molar mass of a polymer. Some properties are size-dependent, in other words, they depend on the length of the molecule such that a longer molecule will have a greater contribution than a smaller or shorter molecule. The mass average molar mass is calculated by the following formula:

$$Mw = (\Sigma N_iM_i^2)/ \Sigma N_iM_i$$

where $N_i$ is the number of molecules with a molecular mass $M_i$

$$\bar{M}_w = \frac{\sum_i N_i M_i^2}{\sum_i N_i M_i}$$

Mw can be determined by static light scattering, small-angle neutron scattering, X-ray scattering and sedimentation velocity, apart from the already mentioned NMR and GPC techniques.

In another particular embodiment of the triblock copolymer, the polydispersity index (PI) of the PLLA-b-PBS-b-PLLA copolymer is 1.5 to 3.

In another particular embodiment of the triblock copolymer, the polydispersity index (PI) of the PBS block is 1.7 to 2.5.

In another even more particular embodiment of the triblock copolymer, the polydispersity index (PI) of the PBS block is 1.8 to 2.2.

These PI values indicated in the above embodiments are combined in particular embodiments of the triblock copolymer according to the first aspect. In other also more particular embodiments, these PI values or combinations thereof (i.e. PI of the triblock copolymer and PI of the PBS block) are combined with each of the previously indicated Mn values of both the copolymer (PLLA-b-PBS-b-PLLA) and the PBS block.

Lastly, the polydispersity index (or polydispersion, PI) is a parameter indicative of the dispersion of molecular sizes in said polymer. Therefore, the further the polydispersity index is from one (polydisperse polymer), the wider the molecular weight distribution will be and the greater the difference in length there will be between the polymer chains. On the contrary, the closer it is to one (monodisperse polymer), the narrower the distribution will be and the more similar the polymer chains will be in length. It quantifies the amplitude of the molecular weight distribution curve (MWD) and represents the ratio between the weight average molecular weight (Mw) and the number average molecular weight (Mn), both measured by the same technique (SEC, NMR, etc.).

The triblock copolymer according to the first aspect of the invention is also characterized in that the onset temperature (To) and the maximum degradation temperature (Tmax) measured by thermogravimetric analysis (TGA) of each of the blocks (PBS and PLLA) is:

To (PBS) of 300-350 °C,
To (PLLA) of 200-220 °C,
Tmax (PBS) of 365-385 °C,
Tmax (PLLA) of 230-240°C.

Similarly, using differential scanning calorimetry (DSC), the copolymer can be characterized according to the first aspect of the invention. Thus, in another particular embodiment, the copolymer is characterized in that the melting temperature (Tm) of each of the blocks (PBS and PLLA) of the copolymer, and crystallization temperature (Tc) of the PBS block measured by DSC is:

Tc (PBS) of 50-70 °C,
Tm (PBS) around 100°C,
Tm (PLLA) of 130-170°C.

As will be discussed later, these copolymers with these structural and thermal characteristics contributed to a biodegradable plastic matrix, particularly a PBS matrix, improvements in their mechanical properties. Specifically, elongation at break, which is a parameter measuring the increase in length that a material experiences when it is subjected to a tensile stress before breaking, was improved. Elongation is expressed as a percentage (%) with respect to the initial length. Furthermore, as for the barrier properties based on the oxygen and water vapor transmission rate, all PBS composite formulations experienced an improvement of more than 20% with respect to the PBS polymer without additive.

Similarly, the aforementioned copolymers with the indicated structural and thermal characteristics also contributed to a biodegradable PLA plastic matrix, improvements in their mechanical properties. Additionally, the elongation at break was improved, and the glass transition temperature decreased.

The inventors have also developed a method for the synthesis of the copolymer of the first aspect, which is a cost-effective method in that complex substances such as organic solvents are not used, and it is also a highly reproducible

method.

Thus, a second aspect of the invention is a method for obtaining (or for the synthesis of) a triblock copolymer of formula PLLA-b-PBS-b-PLLA as defined in the first aspect, characterised in that it comprises the steps of:

(i) mixing in a vessel L-lactide with a PBS polymerization macroinitiator with two hydroxyl groups (OH) at its ends, at a weight ratio of 2:1 to 5:1 of L-lactide:PBS macroinitiator, where the PBS macroinitiator has a number average molecular weight (Mn) of 1500 g/mol to 40000 g/mol, in the presence of a metal-based catalyst, at a ratio of 0.1% to 0.3% by weight with respect to L-lactide;
(ii) allowing the mixture to react under stirring at a temperature of 100 °C to 150 °C for up to 20 hours, or for a suitable time to obtain a triblock copolymer with a number average molecular weight (Mn) of 4000 g/mol to 200000 g/mol, wherein Mn is calculated by gel permeation chromatography; and
(iii) drying of the copolymer obtained in step (ii).

The PBS macroinitiator block with both ends having reactive hydroxyl (OH) groups, or bifunctional oligomer, corresponds to the PBS oligomer or block of the PLLA-b-PBS-b-PLLA triblock copolymer.

In a particular embodiment of the method, the metal-based catalyst is selected from the group consisting of Mg, Al, Ti, Zn, Sn; metal oxides, particularly selected from $TiO_2$, ZnO, $GeO_2$, $ZrO_2$, SnO, $SnO_2$, $Sb_2O_3$, $ZnCl_2$, $SnCl_2$, $AlCl_3$ $SnCl_4$; magnesium diacetate ($Mn(AcO)_2$), iron lactate $Fe_2(LA)_3$, cobalt diacetate ($Co(AcO)_2$), nickel diacetate ($Ni(AcO)_2$), copper oxalate ($Cu(OA)_2$), zinc lactate ($Zn(LA)_2$), yttrium oxalate ($Y(OA)_3$), aluminum isoproxide ($Al(/\text{-}PrO)_3$), titanium(IV) butanoate ($Ti(BuO)_4$), titanium(IV) oxyacetylacetonate ($TiO(acac)_2$), dibutyl tin oxide ($(Bu)_2SnO$), tin(II) 2-ethylhexanoate ($Sn(Oct)_2$); and combinations thereof.

In a particular embodiment of the method, the catalyst is an organometallic catalyst selected from $Ti(BuO)_4$ and $Sn(Oct)_2$. In an even more particular embodiment it is $Sn(Oct)_2$.

In another particular embodiment, the weight ratio of metal-based catalyst to L-lactide is 0.2%.

In another particular embodiment of the method of the second aspect, step (ii) is carried out at a temperature of 120 °C.

Also in another particular embodiment, the reaction time of step (ii) is 20 hours.

The person skilled in the art will understand that the reaction times and temperature of step (ii) indicated as particular embodiments are also applicable in combination with each other and with the rest of the parameters indicated for this method of the second aspect of the invention.

Similarly, all those embodiments relating to the PBS macroinitiator block indicated for the PBS block of the first aspect, they are also applicable to this second aspect.

Schematically, the copolymerization reaction can be described according to the attached Scheme 1:

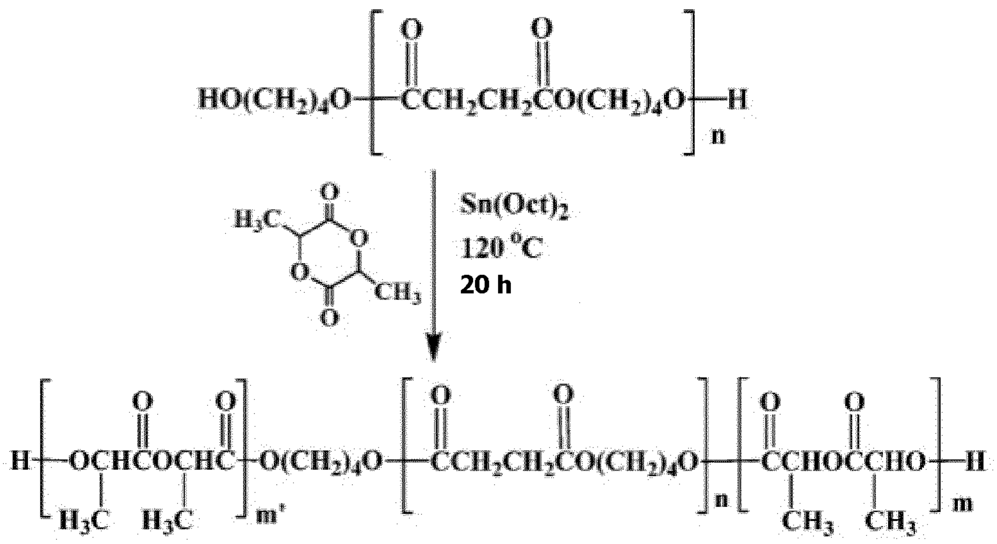


where *n,* m' and m take the values indicated above.

Thus, the triblock copolymer according to the first aspect of the invention can also be defined by the method for obtaining same, which defines its final structural and behavioral characteristics. To that end, the triblock copolymer of the first aspect is that which is obtainable by the method for obtaining same of the second aspect of the invention.

In order to avoid leaving traces of starting materials from the copolymerization reaction (for example, monomers

that have not been able to react), the method comprises, in a particular embodiment, an additional step of purification of the copolymer obtained in step (ii) and generally consisting of precipitation of the copolymer.

Multiple techniques can be used for precipitation. A particular example or embodiment consists of dissolving the copolymer with chloroform and adding an excess (i.e., 10 times greater) of previously cooled methanol and stirring to complete precipitation. The copolymer is then recovered by vacuum filtration and oven drying (e.g. 50°C, 18 h).

In another particular embodiment of the method for obtaining the copolymer, the PBS macroinitiator block with both ends having reactive hydroxyl (OH) groups, in other words, the bifunctional block to which the L-lactide will be attached by ring-opening polymerization reaction, It is a PBS block that is in turn obtainable by a method comprising the steps of:

(i) esterification of succinic acid (SA) and 1,4-butanediol (BDO) mixed at a molar ratio of 1:1.2 (SA:BDO) for 2.5 to 4.0 hours at a temperature of 175 °C to 225 °C;
(ii) polycondensation of the ester of step (i) in the presence of a catalyst selected from an organometallic catalyst, a Bronsted acid, a Lewis acid and Lewis acid oxides, at a temperature comprised between 200 °C-240 °C and for a time of 3.5-4.5 hours, to obtain a polybutylene succinate copolymer with a number average molecular weight (Mn) of 1500 g/mol to 40000 g/mol;
(iii) drying of the copolymer obtained in step (ii).

This method for obtaining the PBS block is also an object of the present invention, regardless of whether it is then part of the copolymer synthesis method. It is also a reproducible, cost-effective, high-performance method due to the presence of the catalyst in the ester polycondensation step. The method results in a bifunctional PBS block, i.e. the PBS macroinitiator, having a number average molecular weight (Mn) of 1500 g/mol to 40000 g/mol, preferably 2500 g/mol to 25000 g/mol, more preferably 4000 g/mol to 10000 g/mol.

In a particular embodiment of the method for obtaining the PBS block (PBS macroinitiator), the temperature at which esterification is carried out (i) is selected from 180 °C, 190 °C, 200 °C and 210 °C. More specifically it is 190 °C.

In a particular embodiment, the catalyst in step (ii) is an organometallic catalyst selected from $Sn(Oct)_2$ and $Ti(OBu)_4$, and added at a ratio of 0.05% to 0.2%, particularly 0.1%, by weight with respect to the weight of succinic acid.

In another particular embodiment, the catalyst of step (ii) is a Brønsted acid selected from $H_2SO_4$ and HCl. In another more particular embodiment, this type of catalyst is added at a maximum ratio of 0.1% by weight with respect to the weight of succinic acid.

In another particular embodiment, the catalyst of step (ii) is a Lewis acid selected from $AlCl_3$; $FeCl_3$; $(Et_2O){\cdot}BF_3$ $(MgCl_2/ZnCl_2)$ and LiCl. In another more particular embodiment, this type of catalyst is added in a maximum proportion by weight of 0.1% with respect to the weight of succinic acid.

In yet another particular embodiment of the method for obtaining the PBS block, the catalyst of step (ii) is a Lewis acid oxide, particularly selected from CaO and $Fe_2O_3$. In another more particular embodiment, this type of catalyst is added in a maximum proportion by weight of 0.1% with respect to the weight of succinic acid.

In another particular embodiment of the method, the temperature of the polycondensation step (ii) is between 215-225 °C.

In the same way as indicated before in the method for obtaining the PLLA-b-PBS-b-PLLA copolymer, the method for obtaining the PBS macroinitiator (PBS block) is characterized, in a particular embodiment, in that it includes an additional step of purification by precipitation after step (ii) of polycondensation.

This additional step of purification can be carried out as indicated above for the copolymer.

As indicated, when these copolymers are added as additives in matrices of other polymeric compounds, improved properties are obtained.

Thus, in a third aspect, the invention also refers to a composition characterized in that it comprises the PLLA-b-PBS-b-PLLA triblock copolymer as defined in the first aspect.

All the particular embodiments mentioned above relating to the triblock copolymer of the first aspect are also applicable to the compositions of the third aspect comprising same.

In a particular embodiment of the third aspect of the invention, the composition is a pharmaceutical composition A, characterized in that it comprises:

(a) the PLLA-b-PBS-b-PLLA triblock copolymer as defined in the first aspect; and
(b) one or more vehicles or excipients.

In another particular embodiment of the third aspect of the invention, the composition is a pharmaceutical composition B, characterized in that it comprises:

(a) the PLLA-b-PBS-b-PLLA triblock copolymer as defined in the first aspect; and

(b) one or more polymers.

In another particular embodiment of the third aspect of the invention, the composition is a pharmaceutical composition C, characterized in that it comprises:

(a) the PLLA-b-PBS-b-PLLA triblock copolymer, as defined in the first aspect;
(b) one or more vehicles or excipients; and
(c) one or more polymers.

In another particular embodiment of compositions A and C, it is characterized in that it comprises one or more excipients or vehicles selected from the group consisting of binders, antioxidants (such as tartaric acid and succinic anhydride), plasticizers, dyes, pigments, flame retardant agents, reinforcing agents, ultraviolet ray absorbing agents, thermal stabilizers, releasing agents, agents that improve surface wettability, fillers selected from organic fillers (such as starch, cellulose and derivatives thereof) and inorganic fillers (such as silica, calcium carbonate, talc, kaolin, kaolinite, titanium oxide, zinc oxide and the like) and combinations thereof.

These excipients or vehicles used in the composition of the invention do not significantly modify the properties of the PLLA-b-PBS-b-PLLA triblock copolymer of the first aspect of the invention. The suitable excipients or vehicles correspond to those that a person skilled in the art would determine based on the type of composition being prepared.

Compositions B and C may include other polymers, for example, thermoplastic polymers, whether biodegradable or not. The composition therefore refers to a polymeric composition comprising one or more polymers, for example, biodegradable and/or thermoplastic polymers, and the triblock copolymer.

Thus, in a particular embodiment of the invention, compositions B and C comprise one or more polymers selected from the group consisting of polylactide homopolymers (or, synonymously, polylactic acid homopolymers), polycaprolactone homopolymers, polybutylene succinate homopolymers, polybutylene succinate adipate homopolymers, polyhydroxybutyrate homopolymers, polyhydroxybutyrate-valerate homopolymers, and combinations thereof.

In a particular embodiment, compositions B and C comprise the polybutylene succinate (PBS) homopolymer as polymer (b) or (c), respectively.

In a particular embodiment, compositions B and C comprise one or more of polylactic acid (PLA) homopolymers as polymer (b) and (c), respectively. In particular, polylactic acid homopolymers selected from the group consisting of poly-L-lactic acid (PLLA), poly-D-lactic acid (PDLA), poly-D,L-lactic acid (PDLLA). More particularly, in compositions B and C, polymer (b) or (c), respectively, is PLLA with a purity of at least 95% by weight of PLLA, more particularly a purity selected from 95%, 96%, 97%, 98%, 99% or 100% by weight of PLLA.

According to this description, the degree of purity of a product or material is expressed as a percentage: purity = weight of pure material/total weight of material x 100.

These compositions that also comprise a biodegradable polymer, the copolymer part of the first aspect, are biodegradable polymeric compositions due to the nature of these two components.

In a particular embodiment of the third aspect, the composition is characterized in that the weight percentage of the triblock copolymer with respect to the total weight of the composition is 2% to 98%.

In a particular embodiment, composition A is characterized in that it comprises a weight percentage of the PLLA-b-PBS-b-PLLA triblock copolymer of the first aspect with respect to the total weight of the composition of 30% to 98%. In a more particular embodiment, the weight percentage of triblock copolymer is 50% to 90%.

In a particular embodiment, composition B is characterized in that it comprises a weight percentage of the PLLA-b-PBS-b-PLLA triblock copolymer of the first aspect with respect to the total weight of the composition of 2% to 50%. In a more particular embodiment, the weight percentage of the triblock copolymer with respect to the total weight of the composition is 3% to 40%. In another even more particular embodiment, the weight percentage of the triblock copolymer with respect to the total weight of the composition is 10% to 35%. In yet another more particular embodiment of composition B, the weight percentage of the triblock copolymer with respect to the total weight of the composition is 20% to 30%.

In a particular embodiment, composition C is characterized in that it comprises a weight percentage of the PLLA-b-PBS-b-PLLA triblock copolymer of the first aspect with respect to the total weight of the composition of 2% to 50%. In a more particular embodiment, the weight percentage of the triblock copolymer with respect to the total weight of the composition is 3% to 40%. In another even more particular embodiment, the weight percentage of the triblock copolymer with respect to the total weight of the composition is 10% to 35%. In yet another more particular embodiment of composition C, the weight percentage of the triblock copolymer with respect to the total weight of the composition is 20% to 30%.

Another particular embodiment of the composition according to the third aspect is a biodegradable polymeric composition B, characterized in that it comprises:

(a) a weight percentage of 10% to 30%, more particularly 20% to 30%, of the PLLA-b-PBS-b-PLLA triblock copolymer, the weight percentage with respect to the total weight of the biodegradable polymeric composition; and
(b) biodegradable polybutylene succinate (PBS) polymer.

Another particular embodiment of the composition according to the third aspect of the invention is a biodegradable polymeric composition C, characterized in that it comprises:

(a) a weight percentage of 10% to 30%, more particularly 20% to 30%, of the PLLA-b-PBS-b-PLLA triblock copolymer, the weight percentage with respect to the total weight of the biodegradable polymeric composition;
(b) one or more excipients or vehicles, as defined above; and
(c) biodegradable polybutylene succinate (PBS) polymer.

These particular embodiments of compositions B and C can also be defined as a polybutylene succinate composite or polybutylene succinate (PBS) matrix, comprising a weight percentage of 10% to 30% (or 20-30%) of a triblock copolymer of poly-L-lactide with polybutylene succinate of formula PLLA-b-PBS-b-PLLA, the weight percentage with respect to the total weight of the biodegradable polymeric composition, and one or more excipients or vehicles for the particular embodiment of composition C.

These compositions therefore correspond with a PBS matrix with the PLLA-b-PBS-b-PLLA triblock copolymer as an additive as defined in the first aspect.

These biodegradable polymeric compositions comprising a PBS matrix or a higher proportion of PBS in their composition and the PLLA-b-PBS-b-PLLA triblock copolymer have advantageous mechanical and thermal properties, as described in the examples.

Thus, another aspect of the invention relates to the use of the PLLA-b-PBS-b-PLLA triblock copolymer as defined in the first aspect in a polymeric composition comprising PBS for increasing mechanical strength and barrier to gases and water vapor in a PBS matrix.

Another particular embodiment of the composition according to the third aspect is a biodegradable polymeric composition B, characterized in that it comprises:

(a) a weight percentage of 10% to 30%, more particularly 20% to 30%, of the PLLA-b-PBS-b-PLLA triblock copolymer, the weight percentage with respect to the total weight of the biodegradable polymeric composition; and
(b) biodegradable polylactic acid (PLA) polymer, particularly PLLA with a purity of at least 95% by weight of PLLA, more particularly a purity selected from 95%, 96%, 97%, 98%, 99% or 100% by weight of PLLA.

Another particular embodiment of the composition according to the third aspect of the invention is a biodegradable polymeric composition C, characterized in that it comprises:

(a) a weight percentage of 10% to 30%, more particularly 20% to 30%, of the PLLA-b-PBS-b-PLLA triblock copolymer, the weight percentage with respect to the total weight of the biodegradable polymeric composition;
(b) one or more excipients or vehicles, as defined above; and
(c) biodegradable polylactic acid (PLA) polymer, particularly PLLA with a purity of at least 95% by weight of PLLA, more particularly a purity selected from 95%, 96%, 97%, 98%, 99% or 100% by weight of PLLA.

These particular embodiments of compositions B and C can also be defined as a biodegradable polymer composite of polylactic acid (PLA), particularly PLLA, or biodegradable polylactic acid (PLA) polymeric matrix, particularly PLLA, comprising a weight percentage of 10% to 30% (or 20-30%) of a triblock copolymer of poly-L-lactide with polybutylene succinate of formula PLLA-b-PBS-b-PLLA, the weight percentage with respect to the total weight of the biodegradable polymeric composition, and one or more excipients or vehicles for the particular embodiment of composition C.

These compositions therefore correspond with a biodegradable PLA polymeric matrix, particularly PLLA with the indicated degrees of purity, with the PLLA-b-PBS-b-PLLA triblock copolymer as defined in the first aspect as an additive.

These biodegradable polymeric compositions comprising a biodegradable PLA polymeric matrix, particularly PLLA, or a higher proportion of biodegradable PLA polymer, particularly PLLA with the indicated degrees of purity, in its composition and the PLLA-b-PBS-b-PLLA triblock copolymer, have advantageous mechanical and thermal properties, as described in the examples. Thus, another aspect of the invention relates to the use of the PLLA-b-PBS-b-PLLA triblock copolymer as defined in the first aspect in a polymeric composition comprising biodegradable polylactic acid (PLA) polymer, particularly PLLA with the indicated degrees of purity, for increasing mechanical strength in a biodegradable polylactic acid (PLA) polymeric matrix, particularly PLLA.

For the processing of these copolymers and compositions comprising same according to the invention, it is

advantageous that they can be distributed in the form of pellets, which are melted and optionally mixed with other ingredients to later give rise to items having different shapes via extrusion or injection molding.

Thus, according to another aspect of the invention, the copolymer according to the first aspect, or polymeric composition according to the third aspect, are also characterized in that they are in the form of pellets.

The term "pellet" as used in this description refers to solid particles having different shapes, such as spherical, oblong or cylindrical, the largest dimension or diameter of which is 100 microns to 3 mm, and which are generally obtained by compression or extrusion of the material forming them, and optionally formatted to have the desired shape, whether spheres or cylinders.

In a particular embodiment, the PLLA-b-PBS-b-PLLA triblock copolymer of the first aspect is in the form of pellets. In another particular embodiment, compositions A, B and C are in the form of pellets and comprise a single plurality of pellets, each of these pellets comprising all the ingredients of the respective compositions. By way of example, composition C comprises a single plurality of pellets, wherein each of the pellets comprises (a) the triblock copolymer, (b) polymers (e.g. the PBS or polylactic acid (PLA) homopolymer), and (c) the excipients or vehicles. These compositions are now ready for the preparation of plastic items according to the invention, as will be discussed later.

In an alternative embodiment, compositions A, B and C of the invention comprise different pluralities of pellets, where the number of pluralities of pellets is equal to the number of ingredients of the compositions, respectively.

In a particular embodiment, composition A comprises two pluralities of pellets, wherein: the first plurality (or type) of pellets consists of the triblock copolymer of the first aspect; and the second plurality of pellets consists of (b) the excipients or vehicles.

In a particular embodiment, composition B comprises two pluralities of pellets, wherein: the first plurality (or type) of pellets consists of the triblock copolymer of the first aspect; and the second plurality of pellets consists of (b) the one or more polymers.

In a particular embodiment, composition C comprises three pluralities of pellets, wherein: the first plurality (or type) of pellets consists of the triblock copolymer of the first aspect; the second plurality of pellets consists of (b) the excipients or vehicles; and the third plurality of pellets consists of (c) the one or more polymers.

In another alternative embodiment, composition B comprises two pluralities of pellets, wherein: the first plurality (or type) of pellets consists of composition A; and the second plurality of pellets consists of (b) the one or more polymers.

In another alternative embodiment, composition C comprises three pluralities of pellets, wherein: the first plurality (or type) of pellets consists of composition A; the second plurality of pellets consists of (b) the excipients or vehicles; and the third plurality of pellets consists of (c) the one or more polymers.

Compositions B and C are suitable for the preparation of plastic items. In particular, compositions B and C having a single plurality (type) of pellets can be used directly in the equipment commonly used for the formation of plastic items, such as extrusion, injection molding and thermoforming equipment. However, compositions B and C having multiple different types of pellets will require a prior mixing step before preparing the plastic items having the desired shaped. Lastly, it is understood from the description that composition A is suitable for the preparation of compositions type B and C.

These compositions of the third aspect of the invention can be prepared using methods widely known in the state of the art according to the type of composition to be prepared, for example, in the form of pellets. Examples of preparing pellets of the triblock copolymer of the first aspect or the compositions of the second aspect include the formation of layers on a particle (e.g., on a non-pareil) or extrusion optionally followed by shaping and forming steps such as spheronization or other similar techniques known for spherical granules.

As previously mentioned, these pellets are those used as raw material for the manufacture of items comprising same. Thus, another aspect of the invention relates the use of the triblock copolymer according to the first aspect, or the composition according to the third aspect, for the manufacture of a plastic item.

Also another aspect of the invention is a plastic item comprising the copolymer according to the first aspect, or the polymeric composition according to the third aspect of the invention.

For the purpose of the invention, the term "item" or "plastic item" refers to any product intended for consumers and containing the PLLA-b-PBS-b-PLLA triblock copolymer of the present invention as defined above.

In one embodiment, the item is a packaging item; particularly a food packaging item. In one embodiment, the item is a packaging item; particularly a food packaging item. In one embodiment, the item is a packaging item selected from the group consisting of extruded packaging items, molded packaging items, injection molded packaging items, blow molded packaging items, laminated items, extrusion molded packaging items, thermoformed packaging items, blown and extruded packaging items, extrusion cast packaging items and foamed packaging items. Examples of packaging items of the present invention include, but are not limited to, containers such as bottles, glasses, trays, vessels, punnets, jars, caps, and lids. Other examples are films or sheets, bags, packaging bands, packaging covers. The items of the present invention can be prepared according to methods well known in the state of the art depending on the type of item being prepared. Examples of methods appropriate for the preparation of the packaging items of the present invention include, but are not limited to, injection molding, injection-blow molding, extrusion, lamination and thermoforming.

In a particular embodiment, the item is an agricultural item. Examples of agricultural items of the present invention include, but are not limited to, films or sheets for agriculture, pots and bags.

Also in one embodiment, the item is a household item. Examples of household items of the present invention include, but are not limited to, compostable waste bags, and films or sheets for wrapping.

In a particular embodiment, the item according to the invention is characterized in that it comprises a composition according to the third aspect and is selected from the group consisting of a composition B and a composition C.

In another particular embodiment, the item according to the invention is characterized in that it also comprises other additional excipients or vehicles which will be suitable or required according to the item and/or its function.

In a particular embodiment, the item of the invention comprises:

- a composition B, which in turn comprises (a) a triblock copolymer according to the first aspect, and (b) one or more polymers; and
- one more excipients or vehicles.

In another particular embodiment, the item of the invention comprises:

- a composition C, which in turn comprises (a) a triblock copolymer according to the first aspect, (b) one or more excipients, and (c) one or more polymers; and
- one more excipients or vehicles.

These additional excipients of the items do not modify the properties of the triblock copolymer of the first aspect or the composition of the third aspect. These include the excipients or vehicles that have already been mentioned for the compositions of the third aspect. Those most suitable ones will be easily determined according to the general knowledge of the person skilled in the art depending on the item to be prepared.

As before, all the particular embodiments described above for the first and third aspects of the invention are applicable to the items comprising same.

Throughout the description and the claims, the word "comprises" and its variants do not intend to exclude other technical features, additives, components or steps. Furthermore, the word "comprises" includes the case of "consists of". For those skilled in the art, other objects, advantages and features of the invention may be partially deduced from both the description and the embodiment of the invention. The following examples and drawings are provided by way of illustration and are not intended to limit the present invention. Furthermore, the present invention covers all possible combinations of particular and preferred embodiments indicated herein.

BRIEF DESCRIPTION OF THE FIGURES

Figure 1 shows the comparison of the % elongation at break of the PBS composites obtained with the pure material reference (homopolymer).

Figure 2 illustrates the comparison of Young's modulus of the PBS composites obtained with the pure material reference (homopolymer).

EXAMPLES

<u>Example 1</u>. Preparation of PLLA-b-PBS-b-PLLA triblock copolymer

The synthetic route of triblock copolymers for modifying polybutylene succinate (PBS) matrices consists of two steps mainly, the synthesis of a pre-polymer and the synthesis of the copolymer itself. The first step is the synthesis of the PBS pre-polymer with two hydroxyl groups at the ends, or bifunctional, in which medium-short sized chains are obtained. Next, said bifunctional PBS pre-polymer is reacted with L-lactide, which gives rise to poly(lactic acid) (PLLA) chains that will bond to the PBS chains through a linear copolymerization process. The methodology for obtaining the reaction of each step is described below.

1.1. Step 1. Synthesis of bifunctional PBS pre-polymer (HO-PBS-OH) (also referred to as PBS macroinitiator in this description).

Sub-step 1.1 - Esterification:

The objective of sub-step 1.1 for the synthesis of the pre-polymer is to provoke the reaction between the two monomers forming the PBS, which are succinic acid (SA) and 1,4-butanediol (BDO), giving rise to small sized chains or oligomers. The selected ratio of succinic acid (referred to as SA) and 1,4-butanediol (referred to as BDO) was [SA:BDO 1:1.2], indicated in moles. Both monomers were placed in a previously washed, dried and cooled round bottom flask. The flask was connected to a nitrogen intake using a tubular bubbler, through which a constant stream of $N_2$ was passed. There was placed in another mouth of the flask an assembly which allowed the removal of the water that was formed during polycondensation: a Vigreux column coupled to an elbow piece in the upper part of which a thermometer was placed and placed on the side was a condenser, cooled with water, which ends in an elbow through which the water will come out and be collected in a beaker. The flask was placed in a silicone oil bath, preheated to 190°C, under constant stirring. The reaction time is determined by the release of water from the end of the condenser, the reaction ending when such release ceases, after about 2.5 - 4 hours. Four hours is generally established as optimal.

Sub-step 1.2 - Polycondensation:

The purpose of sub-step 2 was to obtain larger chains, by the binding of the oligomers synthesized in the previous sub-step. To accelerate this reaction, different catalysts can be used - in this case tin octoate ($Sn(Oct)_2$) was used for the first reference and titanium butanoate ($Ti(OBu)_4$) for the remaining three, as seen in Table 2. For the reaction of this sub-step, the assembly of the previous step was maintained. This consists of the flask with the reaction mixture connected to a nitrogen intake by means of a tubular bubbler, through which a constant stream of $N_2$ passes, at another mouth of the flask, the Vigreux column is kept coupled to an elbow piece in the upper part of which a thermometer has been placed and, on the side of which a water-cooled condenser was placed. In this case, the water collector was removed and, in its place, there was placed flask to which a vacuum pump/connection was coupled, keeping the system watertight. The purpose of this vacuum connection was to eliminate any water or possible residual monomers that may be in the reaction medium.

The steps to carry out this second sub-step of synthesis of bifunctional PBS pre-polymer were as follows:

- Add the catalyst at a proportion by weight of 0.1% with respect to the amount of succinic acid that was initially used.
- Connect the vacuum system, removing the connector from the initial assembly.
- Increase the temperature to a maximum of 230°C.
- Leave the mixture to react for 4 hours. Once this time has passed, remove the flask from the bath and let it cool to room temperature.

To ensure the purity of the product and to confirm that there are no monomers or moisture in the medium that could affect the following copolymerization reaction, a purification sub-step may additionally be included. The purification sub-step consists of adding an amount of 8 ml/g of chloroform for dissolution, then pouring in a 10-fold excess of previously cooled methanol and stirring vigorously until the product completely precipitates. Lastly, the purified polymer is recovered by vacuum filtration and dried in a vacuum oven at 50 °C for 18 h. It should be noted that, whether or not the purification described is carried out, drying must be carried out in all cases in order to remove any trace of moisture that may be found in the product, preventing it from interfering in the following copolymerization reaction.

The following diagram shows the reactions of both sub-steps, sub-step 1: esterification and sub-step 2: polycondensation, starting from the product of the previous step:

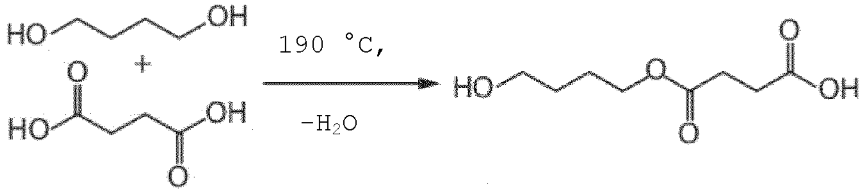

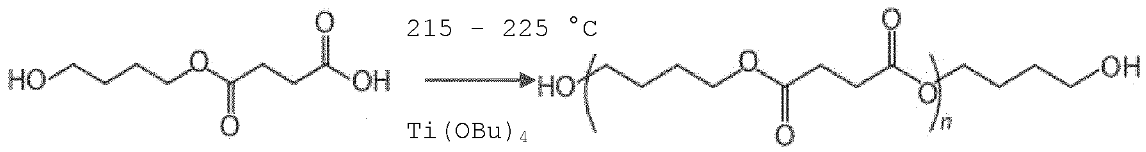


Table 1 shows the conditions of sub-step 1.1 of esterification and Table 2 shows those of sub-step 1.2 of polycondensation, slightly varying the synthesis conditions to check its effect.

Table 1. Reaction conditions of sub-step 1.1 of esterification of the synthesis of the bifunctional PBS pre-polymer.

| Reference | SA:BDO (mol) | Time | Temperature | Stirring |
|---|---|---|---|---|
| **PBS_R1** | 1:1.2 | 5 h | 190 °C | Magnetic |
| **PBS_R2** | 1:1.2 | 2.5 h | 190 °C | Magnetic |
| **PBS_R3** | 1:1.2 | 4 h | 190 °C | Magnetic |
| **PBS_R4** | 1:1.2 | 4 h | 190 °C | Magnetic |

Table 2. Reaction conditions of sub-step 1.2 of polycondensation of the synthesis of the bifunctional PBS pre-polymer.

| Reference | Catalyst (weight %) | Time | Temperature | Stirring |
|---|---|---|---|---|
| **PBS_R1** | 0.1% $Sn(Oct)_2$ | 4 h | 225 °C | Magnetic |
| **PBS_R2** | 0.1% $Ti(OBu)_4$ | 4 h | 225 °C | Magnetic |
| **PBS_R3** | 0.1% $Ti(OBu)_4$ | 4 h | 215 °C | Magnetic |
| **PBS_R4** | 0.1% $Ti(OBu)_4$ | 4 h | 220 °C | Magnetic |

Magnetic stirring was maintained in all reactions since the volume of reaction mixture could be stirred effortlessly with this form of stirring. It could have been modified to paddle stirring with higher volumes.

Once the bifunctional purified (if applicable) and/or dried PBS pre-polymer is obtained (with a hydroxyl group at each end of the chain), it goes on to the next step of copolymerization with PLLA.

1.2. Step 2. Copolymerization to obtain PLLA-b-PBS-b-PLLA

The objective of this reaction was the binding of both polymer blocks, PBS y PLLA, starting from the previously synthesized bifunctional PBS pre-polymer and L-lactide, from which the PLLA block is synthesized. These PLLA chains will be formed at both ends of the bifunctional PBS pre-polymer, this reaction occurring through a ring opening polymerization process (ROP) induced by a specific catalyst.

Before the reaction, if the bifunctional PBS pre-polymer had been stored as indicated in the previous step, it was dried in a vacuum oven at a temperature of 50 °C for 12 - 18 h in order to remove traces of moisture that may have been acquired from the environment.

A determined amount of the bifunctional PBS pre-polymer and the corresponding amount of L-lactide were placed in a round-bottom flask, following a ratio of [PBS:L-lactide] by weight of 1:2 to 1:3.

The catalyst, $Sn(Oct)_2$ in this case, was also added at a ratio of 0.2% by weight with respect to L-lactide. The mixture was purged with nitrogen for half an hour. Next, said flask was placed in a silicone oil bath previously heated to 120 °C with constant stirring and left to react for 20 h. The type of stirring can vary depending on the volume of reaction mixture, with magnetic stirring being effective only for synthesis of less than 100 g, with mechanical stirring (paddle stirrer) being used for greater production.

Once the polycondensation reaction ended, it was considered necessary to carry out a purification by precipitation reaction, as was done in some cases with the bifunctional PBS pre-polymer, to remove any remaining monomers that may have been left unreacted. Nevertheless, in scaling this reaction by adjusting the reaction parameters (time/temperature) and amounts of catalysts, this step can be eliminated. It was vacuum filtered and dried before being stored in a desiccator.

Scheme 1 illustrated above summarizes the reaction carried out, the reagents, and conditions and the end product.

Table 3 shows the synthesis conditions of the different triblock copolymers obtained, indicating the starting bifunctional PBS pre-polymer in each case.

Table 3. Reaction conditions of the PLLA-b-PBS-b-PLLA triblock copolymer syntheses carried out.

| Reference | Starting PBS | PBS:L-lactide | Catalyst | Time | Temp. | Stirring |
|---|---|---|---|---|---|---|
| **PBScoPLA_R1** | PBS_R1 NP | 1:2 | 0.2% $Sn(Oct)_2$ | 5 h | 120 °C | Magnetic |
| **PBScoPLA_R2** | PBS_R1 NP | 1:2 | 0.2% $Sn(Oct)_2$ | 20 h | 120 °C | Magnetic |
| **PBScoPLA_R3** | PBS_R2 P | 1:2 | 0.2% $Sn(Oct)_2$ | 20 h | 120 °C | Magnetic |
| **PBScoPLA_R4** | PBS_R1 P | 1:2 | 0.2% $Sn(Oct)_2$ | 20 h | 120 °C | Magnetic |
| **PBScoPLA_R7** | PBS_R1 P | 1:3 | 0.2% $Ti(OBu)_4$ | 20 h | 120 °C | Magnetic |
| **PBScoPLA_R8** | PBS_R2 P | 1:3 | 0.2% $Ti(OBu)_4$ | 20 h | 120 °C | Magnetic |
| **PBScoPLA_R9** | PBS_R3 NP | 1:2 | 0.2% $Sn(Oct)_2$ | 20 h | 120 °C | Magnetic |
| **PBScoPLA_R10** | PBS_R3 NP | 1:3 | 0.2% $Sn(Oct)_2$ | 20 h | 120 °C | Magnetic |
| **PBScoPLA_R11** | PBS_R4 NP | 1:3 | 0.2% $Sn(Oct)_2$ | 20 h | 120 °C | Magnetic |
| **PBScoPLA_R12** | PBS_R4 NP | 1:2 | 0.2% $Sn(Oct)_2$ | 20 h | 120 °C | Mechanical |
| P: purified NP: Not purified | | | | | | |

The ratios 1:2 and 1:3 [PBS:L-lactide] were selected as suitable.

Tests were carried out by adding two catalysts, $Sn(Oct)_2$ and $Ti(OBu)_4$, selecting the former because it is more effective in opening the L-lactide ring, as is verified, in the last copolymerization reactions, in which a higher number average molecular weight (Mn) is obtained.

The reaction time was finally set at 20 h because 5 hours are considered insufficient, since, in the first copolymerization test, the polymerization of L-lactide was poor. Times of 15 to 25 hours are suitable.

As for the type of stirring, magnetic stirring was considered suitable for small volumes, since the reaction mixture has a relatively high viscosity, therefore, mechanical stirring with paddles is considered the best option when there is a sufficient volume. The copolymers were finally subjected to a purification step.

For the preparation of a PBS polymer composition comprising the copolymer of this Example 1 as an additive, as will be seen, the copolymers obtained according to the conditions of the references PBScoPLA_R11 and PBScoPLA_R12 (see Example 2) were used.

1.3. Characterization of PLLA-b-PBS-b-PLLA copolymers:

1.3.1. Molecular weight by gel permeation chromatography (GPC):

The equipment used for this determination is an OMNISEC (Malvern). 140 mg of each sample were injected with a concentration of 20 - 30 mg/ml, using chloroform as the mobile phase with a flow rate of 1 ml/min at 35 °C. PSS-cpla230K_Certified Poly(lactide) material [Mp 209000; Mw 249400; Mn 127300; PDI 1.98] was used as calibration standard for the equipment. The values obtained for the different samples analyzed are shown below.

The chromatograms for the different bifunctional PBS pre-polymers and their corresponding triblock copolymers were very similar to each other (data not shown).

It was observed that in both the pre-polymer (e.g. PBS-R4) and in the copolymers (e.g. PBScoPLA_R11), a single peak appeared. In the case of the copolymer, this can be explained by the great similarity in size between different blocks, preventing their separation, giving rise to a single peak.

The number and mass average molecular weight values (Mn and Mw) and the polydispersity index (PDI) were extracted from these chromatograms. Table 4 shows those corresponding to the different synthesized bifunctional PBS pre-polymers.

Table 4. Values extracted from the GPC curves for the synthesized bifunctional PBS pre-polymers.

| Reference | $M_n$ | $M_w$ | PDI |
|---|---|---|---|
| **PBS_R1** | 3578 | 13520 | 3.775 |
| **PBS_R2** | 4129 | 30995 | 7.573 |
| **PBS_R3** | 3941 | 22290 | 5.664 |
| **PBS_R4** | 6577 | 13675 | 2.082 |

Low molecular weight bifunctional PBS pre-polymers were obtained, as expected, to be able to carry out a copolymerization starting from same. PBS_R4 was selected as the most optimized because it had a slightly higher molecular weight and the lowest polydispersity index, which indicates that there is less variability in the polymer chain size. Table 5 shows the parameters of the PLLA-b-PBS-b-PLLA copolymers obtained.

Table 5. Values extracted from SEC curves for different synthesized triblock copolymers.

| Reference | Starting PBS | PBS:L-lactide | $M_n$ | $M_w$ | PDI |
|---|---|---|---|---|---|
| **PBScoPLA_R1** | PBS_R1 | 1:2 | 4824 | 28245 | 5.857 |
| **PBScoPLA_R2** | PBS_R1 | 1:2 | 1561 | 36285 | 5.457 |
| **PBScoPLA_R3** | PBS_R2 | 1:2 | 7141 | 70810 | 9.995 |
| **PBScoPLA_R4** | PBS_R1 | 1:2 | 5252 | 26100 | 4.962 |
| **PBScoPLA_R7** | PBS_R1 | 1:3 | 5503 | 25155 | 4.629 |
| **PBScoPLA_R8** | PBS_R2 | 1:3 | 7852 | 63270 | 8.107 |
| **PBScoPLA_R9** | PBS_R3 | 1:2 | 4506 | 28650 | 6.358 |
| **PBScoPLA_R10** | PBS_R3 | 1:3 | 4199 | 19780 | 4.710 |
| **PBScoPLA_R11** | PBS_R4 | 1:3 | 18120 | 31970 | 1.764 |
| **PBScoPLA_R12** | PBS_R4 | 1:2 | 10490 | 21010 | 2.003 |

Lower molecular weights, not exceeding 7800 g/mol, and relatively high polydispersity indices were obtained in the first copolymers synthesized. This type of copolymers can be used in cases where polydispersity is not a critical element, such as for fillers in other types of materials. The last two copolymers, synthesized with the bifunctional PBS pre-polymer PBS-R4, with an Mn of 6500, an Mw of 13600 and a PDI of 2.08, led to a higher molecular weight and one of the lowest polydispersity indices (see Table 5). These more homogeneous copolymers are suitable as additives to ensure behavioral homogeneity in the final polymer mixture to which they are added.

1.3.2. Chemical structure of the copolymer by Fourier transform infrared spectroscopy (FTIR).

The determination was also carried out by FTIR. This determination was carried out in a Tensor 27 (Bruker) with an ATR objective (Specac). The analysis conditions were set at 25 °C in N2 atmosphere, analyzing the infrared region between 4000 and 400 cm-1 with a resolution of 4 cm-1 and 64 scans.

The FTIR of the PBS pre-polymers showed characteristic peaks in the range of 2940 - 2860 cm-1, corresponding to the stretching of the methylene groups (CH2) of the starting butanediol; the highest signal is detected at 1710 cm-1 and corresponds to the stretching of the carbonyl (C=O) of the starting succinic acid; the methylene groups attached to the mentioned carbonyl give rise to the small peaks that can be seen between 1445 - 1420 cm-1, the stretching of the ester bond is detected at approximately 1310 cm-1; the peaks corresponding to the stretching of the C-O groups attached to a methylene are found around 1150 cm-1.

In the case of synthesized copolymers, the scans showed all the typical PBS bands, which have already been mentioned above. Furthermore, the following peaks corresponding to the PLLA block were detected: absorption of the ester group (-CHC=O-) at 1755 cm-1 and stretching of the C-O attached to a methyl at 1090 cm-1. The fact that independent peaks appear from the ester groups of the bifunctional PBS and PLLA pre-polymers indicates that these are block copolymers and not random, since only one absorption band appears in the latter associated with this type of bond (H. Qian, J. Bei and S. Wang, "Synthesis, characterization and degradation of ABA block copolymer of L-lactide

and ε-caprolactone", Polymer degradation and stability, 68, 2000, 423-429). It should also be noted with respect to the differences between different copolymers that, as the ratio of PLLA to PBS increased (1:2 or 1:3), the intensity of the PLLA peaks increased.

The PBScoPLLA_R11 copolymer (produced from the reaction of at a ratio of 1:3 PBS:L-Lactide) even showed absorption bands associated with PLLA greater than those of the bifunctional PBS pre-polymer, which seems to indicate that the degree of polymerization of this block was greater in this case.

1.3.3. Thermal and mechanical properties of bifunctional PBS pre-polymer and PLLA-b-PBS-b-PLLA triblock copolymer.

The thermal and mechanical properties of the triblock copolymers selected as suitable as additives in PBS polymeric matrices are detailed below (data corresponding to the products PBScoPLA_R11 and PBScoPLA_R12). Those of the bifunctional PBS pre-polymer that was used to obtain it (PBS-R4) are also detailed below.

1.3.3.1. Thermogravimetric analysis (TGA).

The equipment used to perform this analysis was a TGA Q5000 IR (TA Instruments). The method of analysis consisted of a temperature rise from 25 to 900 °C at a rate of 10 °C/min, starting in nitrogen atmosphere and changing to oxygen at 750°C. Lastly, the temperature is maintained at 900 °C for 5 minutes. This analysis allowed the extraction of degradation parameters of the analyzed samples, which are shown below.

Table 6. Degradation parameter values obtained by TGA for the synthesized bifunctional PBS pre-polymers.

| Reference | $T_o$, °C | $T_{max}$, °C | ΔW, % |
|---|---|---|---|
| **PBS_R4** | 363.33 | 404.80 | 99.78 |

Table 7. Degradation parameter values obtained by TGA for synthesized CPBs.

| Reference | Starting PBS | $T_{o(PLLA)}$, °C | $T_{o(PBS)}$, °C | $T_{max(PLLA)}$, °C | $T_{max(PBS)}$, °C | $\Delta W_{PLLA}$, % | $\Delta W_{PBS}$, % |
|---|---|---|---|---|---|---|---|
| **PBScoPLA_R11** | PBS_R4 | 214.62 | 331.88 | 231.35 | 364.84 | 73.61 | 25.50 |
| **PBScoPLA_R12** | PBS_R4 | 220.61 | 350.84 | 238.63 | 385.53 | 52.58 | 41.58 |

To (T onset) is the temperature at which weight loss begins to be detected (beginning of degradation).

Tmax is the temperature at which a sample has lost the maximum of its weight (maximum degradation temperature).

The degradation of the PLLA block was quite similar in both copolymers, with temperature variations of 6 - 7 °C. However, in the case of the PBS block, there were more differences, with a shift to lower temperatures being observed in the R11 copolymer, which could be due to the influence of PLLA, since it has the highest molecular weight obtained, as mentioned above.

1.3.3.2. Differential Scanning Calorimetry (DSC)

The DSC equipment used for the analysis of the synthesized polymers is a Q2000 model (TA Instruments). The defined method starts with an equilibrium at 23°C, after which a first heating is carried out up to 200/250 °C, followed by cooling to - 90 °C, and a second heating at 200/250 °C, maintaining a heating/cooling rate of 10 °C/min in a nitrogen atmosphere. The results of thermal transitions obtained with this determination are shown below.

This section shows the thermal transitions experienced by the bifunctional PBS pre-polymers PBS-R4. First, the parameters of the cooling and second heating step (Table 8) of PBS-R4 are provided.

Table 8. Thermal transitions of cooling and 2nd heating steps obtained by DSC for the bifunctional PBS pre-polymers.

| Reference | Cooling | | | 2nd Heating | | | | |
|---|---|---|---|---|---|---|---|---|
| | $T_c$, °C | $\Delta H_c$, J/g | $T_{cc}$, °C | $\Delta H_{cc}$, J/g | $T_{m1}$, °C | $T_{m2}$, °C | $\Delta H_{m1}$, J/g | $\Delta H_{m2}$, J/g |
| **PBS_R4** | 74.44 | 82.54 | 91.50 | 12.36 | 101.04 | 111.24 | 6.79 | 50.89 |

Table 9 and Table 10 show the thermal transitions detected during the cooling and second heating, respectively, of PLLA-b-PBS-b-PLLA triblock copolymers.

Table 9. Thermal transitions of the DSC cooling step for synthesized CPBs.

| Reference | $T_{c(PLLA)}$, °C | $\Delta H_{c(PLLA)}$, J/g | $T_{c(PBS)}$, °C | $\Delta H_{c(PBS)}$, J/g |
|---|---|---|---|---|
| PBScoPLA_R11 | 100.81 | 33.82 | 57.79 | 6.45 |
| PBScoPLA_R12 | ND | ND | 67.83 | 37.75 |

Table 10. Thermal transitions of the second heating step of synthesized CPBs.

| Reference | $T_{g(PBS)}$, °C | $T_{cc(PLLA)}$, °C | $\Delta H_{cc (PLLA)}$, J/g | $T_{cc (PBS)}$, °C | $\Delta H_{cc (PBS)}$, J/g | $T_{m (PLLA)}$, °C | $\Delta H_{c (PLLA)}$, J/g | $T_{m (PBS)}$, °C | $\Delta H_{c (PBS)}$, J/g |
|---|---|---|---|---|---|---|---|---|---|
| PBScoPLA_R11 | ND | ND | ND | ND | ND | 161.75 | 41.98 | 106.34 | 4.26 |
| PBScoPLA_R12 | ND | ND | ND | ND | ND | 138.07 | 20.27 | 100.86 | 21.65 |

Based on the DSC curves (not shown) and data in the tables, crystallization of PLLA and PBS was detected in R11, the former being very slight due to the lower flexibility of movement of its chains, and a single peak was detected in R12, but displaced at a higher temperature than typical PBS, indicating that they may have overlapped those of both polymers. In both cases the crystallization process was completed in this step, since no exothermic peak is observed in the second heating. In this second step, two fusion temperatures are detected, that of PBS between 100 and 106 °C, and that of PLLA between 138 and 162 °C, being able to explain the highest value obtained, corresponding to R11, as a result of its higher molecular weight.

All thermal and mechanical characteristics, together with the molecular weights of the triblock copolymers of the invention, are summarized below:

| PBS:L-lactide ratio of triblock copolymer | 1:2 (R12) |
|---|---|
| Number average molecular weight $M_n$ (g/mol) | ~10000 |
| Weight average molecular weight $M_w$ (g/mol) | ~21000 |
| Polydispersity index | ~2.03 |
| Melting temperature $T_{m-PBS}$ (°C) | 101 |
| Crystallization temperature $T_{c-PBS}$ (°C) | 68 |
| Melting temperature $T_{m-PLA}$ (°C) | 138 |
| Degradation onset temperature $T_{0-PBS}$ (°C) | 350 |
| Maximum degradation temperature $T_{max-PBS}$ (°C) | 385 |
| Degradation onset temperature $T_{0-PLA}$ (°C) | 220 |
| Maximum degradation temperature $T_{max-PLA}$ (°C) | 240 |

| PBS:L-lactide ratio of triblock copolymer | 1:3(R11) |
|---|---|
| Number average molecular weight $M_n$ (g/mol) | ~18000 |
| Weight average molecular weight $M_w$ (g/mol) | ~32000 |
| Polydispersity index | ~1.7 |

(continued)

| PBS:L-lactide ratio of triblock copolymer | 1:3(R11) |
|---|---|
| Melting temperature $T_{m\text{-}PBS}$ (°C) | 106 |
| Crystallization temperature $T_{c\text{-}PBS}$ (°C) | 58 |
| Melting temperature $T_{m\text{-}PLA}$ (°C) | 162 |
| Degradation onset temperature $T_{0\text{-}PBS}$ (°C) | 332 |
| Maximum degradation temperature $T_{max\text{-}PBS}$ (°C) | 365 |
| Degradation onset temperature $T_{0\text{-}PLA}$ (°C) | 215 |
| Maximum degradation temperature $T_{max\text{-}PLA}$ (°C) | 232 |

As will be detailed in the following example, the copolymers of the invention are very suitable as additives in PBS polymeric base matrices, to which they confer improved properties from a mechanical (strength and barrier properties) and thermal point of view, with respect to the PBS matrix without additive.

Example 2. Preparation of PBS matrices with the PLLA-b-PBS-b-PLLA triblock copolymer additive

2.1. Preparation of compositions (composites) and items comprising same

In order to determine the effect of the introduction of the synthesized triblock copolymers on the final properties of a commercial bioPBS matrix, laboratory-scale processing tests were carried. Table 11 shows the most relevant properties of said polymeric matrix.

Table 11. Main properties of the polymeric matrix used for processing tests.

| Material | Grade/ Manufacturer | Density (g/cm$^3$) | Melt flow rate (g/ 10min) @(°C, Kg) | $T_m$ (°C) | Elongation at break (%) | Young's Modulus (MPa) |
|---|---|---|---|---|---|---|
| **bioPBS** | FZ91PM / MCPP | 1.26 | 5@190, 2.16 | 115 | 350 | 575 |

The compositions shown in the table below, where the weight % of added triblock copolymer and PBS matrix are shown, were prepared using the PBScoPLLA_R11 (also referred to as CPB 2) and PBScoPLLA_R12 (also referred to as CPB 1) triblock copolymers. The different processed formulations are shown in Table 12, referring to the block copolymer with the acronym CPB.

Table 12. Formulations processed on a laboratory scale with the two synthesized copolymers.

| Polymeric matrix grade | Code | CPB | % CPB added |
|---|---|---|---|
| **bioPBS FZ91PM** | **PBS (Ref)** | - | - |
| | **90PBS/10CPB 1** | PBScoPLA Pr1 (1:2) or CPB 1 (PBScoPLLA_R12) | 10 |
| | **80PBS/20CPB 1** | | 20 |
| | **70PBS/30CPB 1** | | 30 |
| | **90PBS/10CPB 2** | PBScoPLA Pr2 (1:3) or CPB 2 (PBScoPLLA_R11) | 10 |
| | **80PBS/20CPB 2** | | 20 |
| | **70PBS/30CPB 2** | | 30 |

To produce these composites or mixtures, an Xplore Instruments BV micro-compounding system with a volume capacity of 15 cc was used. Two types of standardized specimens were obtained: one to characterize barrier properties and the other for mechanical properties.

The processing conditions for obtaining specimens with the different proposed formulations are summarized in Table 13.

Table 13. Processing conditions (extrusion+injection) to obtain PBS/CPB composites.

| Polymeric matrix | CPB | Thermal range, °C | Screw speed, rpm | Residence time, min | Inject. Temp., °C | Mold Temp., °C |
|---|---|---|---|---|---|---|
| BioPBS FZ91PM | CPB 1 | 170-175-180 | 100 | 4 | 170 | 40 |
| | CPB 2 | 170-175-180 | 100 | 4 | 170 | 40 |

A small decrease in transparency was observed upon increasing the CPB content in the composite, since the copolymer can act as a nucleating agent, increasing the crystallinity of the final material.

2.2. Characterization of PBS mixtures reinforced with PLLA-b-PBS-b-PLLA triblock copolymer

Once the different composites were obtained, they were characterized to assess their suitability to be applied as a packaging material. Different parameters were analyzed, with the results thereof being shown below.

2.2.1. Thermal properties. TGA and DSC analysis

For TGA analysis, the same equipment and method was used as in the case of pre-polymers and copolymers (Example 1). The results obtained for the mixtures of both copolymers with a PBS matrix are shown below.
The parameters extracted from the degradation curves (not shown) are shown in Table 14.

Table 14. Degradation parameters of the processed PBS/CPB composites 1 and 2 obtained by TGA.

| Reference | $T_{0,1}$ | $T_{0,2}$ | $T_{peak,1}$ | $T_{peak,2}$ | $\Delta W_1$, % | $\Delta W_2$, % |
|---|---|---|---|---|---|---|
| PBS | - | 387 | - | 420 | 100 | - |
| 90PBS/10CPB1 | 294 | 385 | 323 | 414 | 5 | 95 |
| 80PBS/20CPB1 | 305 | 389 | 352 | 417 | 12 | 88 |
| 70PBS/30CPB1 | 295 | 387 | 317 | 415 | 15 | 85 |
| 90PBS/10CPB2 | 290 | 388 | 322 | 418 | 5 | 95 |
| 80PBS/20CPB2 | 288 | 387 | 314 | 416 | 11 | 89 |
| 70PBS/30CPB2 | 279 | 385 | 306 | 415 | 20 | 80 |

When both copolymers were introduced, two completely differentiated degradation peaks were detected. The first peak, with the lowest onset temperature and maximum degradation, was assigned to the PLLA block, and the second was assigned to the mixture of the PBS matrix and the PBS block of the copolymer. The degradation process of the PBS matrix sustained hardly any change at all, despite adding an increasing proportion of PLLA, a polymer with a lower thermal resistance.
For DSC analysis, the same equipment and method were used as in the case of pre-polymers and copolymers. The results obtained for the mixtures of both copolymers with PBS are shown below.
The values of the most representative parameters extracted from the DSC curves are shown in Table 15.

Table 15. Parameters corresponding to the thermal transitions detected for the processed PBS/CPB composites 1 and 2 obtained by DSC.

| Reference | $T_c$ | $T_g$ | $T_{cc}$ | $T_{m,1}$ | $T_{m,2}$ |
|---|---|---|---|---|---|
| PBS | 74 | - 23 | 98 | 112 | - |
| 90PBS/10CPB1 | 89 | -18 | - | 115 | 106 |
| 80PBS/20CPB1 | 88 | - 10 | - | 114 | 105 |
| 70PBS/30CPB1 | 86 | - 8 | - | 115 | 104 |
| 90PBS/10CPB2 | 88 | - 15 | - | 115 | 106 |

(continued)

| Reference | $T_c$ | $T_g$ | $T_{cc}$ | $T_{m,1}$ | $T_{m,2}$ |
|---|---|---|---|---|---|
| **80PBS/20CPB2** | 87 | -13 | - | 115 | 105 |
| **70PBS/30CPB2** | 85 | - 5 | - | 114 | 104 |

A higher crystallization temperature is detected with the introduction of the copolymer, but it remains constant despite increasing the amount thereof. The melting temperature of PBS remains constant, although the appearance of a small "shoulder" was noted at lower temperatures, which may correspond to the PBS chains of the copolymer the melting of which occurred at a slightly lower temperature, as was verified in the characterization of the copolymer. The glass transition temperature (Tg) increases with the amount of copolymer and, therefore, of PLLA. This means that the amorphous parts of the PBS matrix and block have mixed with those of the PLLA block, confirming a correct introduction of the copolymer.

2.2.2. Mechanical properties: Tensile strength

The tensile strength of the specimens processed with PBS and the two copolymers synthesized was evaluated based on the ISO 527-3 standard (without a strain gauge). The dimensions of the specimen are 50x4 mm and the test was carried out at a speed of 50 mm/min without pre-stressing. The results obtained with these tests are shown below.

The comparison of the bioPBS blank with the samples obtained from this matrix and the addition of different percentages of CPB 1 and CPB 2 is shown in Figure 1 and Figure 2, respectively.

The best results are obtained with CPB 1 in terms of elongation at break, while Young's modulus decreases less with CPB 2. The maximum elongation at break value is obtained with 30% CPB 1, increasing by 10%; however, with 10% CPB 1, an acceptable elongation at break is obtained and Young's modulus remains more constant.

2.2.3. Mechanical properties: Barrier properties

The oxygen and water vapor barrier properties were analyzed. For the oxygen measurement, a Mocon OX-TRAN 2/21 ST device was used and was carried out according to the ASTM D3985 standard under conditions of 23 °C and 0% relative humidity (RH). In the case of water vapor, Mocon Permatran W 3/33 SG+ module was used and the measurement was carried out according to the ASTM F1249 standard under conditions of 38 °C and 90% RH. The thickness of the measured specimens was about 650 μm and between 2 and 4 specimens were measured, according to the homogeneity of results obtained in each case.

Tables 16 and 17 show the values of oxygen permeability (OTR) in cubic centimeters per square meter and day (cc/m2.day) and water vapor permeability (WVTR) in grams per square meter and day (g/m2.day), respectively, obtained for the references processed with bioPBS and CPBs.

The oxygen barrier increases by more than 10% with the addition of 10% of both copolymers, reaching almost a 30% improvement with the rest of the references, and surpassing it in the case of CPB 1. Regarding the water vapor barrier, the best values were obtained with 30% CPB 1, which exceeds a 20% improvement, and with CPB 2 at 20 and 30%, which reaches a 20% increase.

Table 16. Oxygen permeability (OTR) values at 23 °C and 0% relative humidity (RH) and percentage of improvement with respect to the PBS homopolymer

| Code | Permeability cc·/m$^2$·day·atm | Improvement over pure bioPBS FZ91PM (%) |
|---|---|---|
| **bioPBS FZ91PM** | 34.17 | - |
| **90PBS/10CPB 1** | 29.85 | 13 |
| **80PBS/20CPB 1** | 24.41 | 29 |
| **70PBS/30CPB 1** | 23.14 | 32 |
| **90PBS/10CPB 2** | 29.82 | 13 |
| **80PBS/20CPB 2** | 24.20 | 29 |
| **70PBS/30CPB 2** | 24.25 | 29 |

Table 17. Water vapor permeability (WVTR) and percentage of improvement compared to PBS homopolymer

| Code | WVTR (g/m2.day) | Improvement over pure bioPBS FZ91PM (%) |
|---|---|---|
| **bioPBS FZ91PM** | 22.65 | - |
| **90PBS/10CPB 1** | 19.20 | 15 |
| **80PBS/20CPB 1** | 18.79 | 17 |
| **70PBS/30CPB 1** | 17.36 | 23 |
| **90PBS/10CPB 2** | 20.99 | 7 |
| **80PBS/20CPB 2** | 18.11 | 20 |
| **70PBS/30CPB 2** | 18.04 | 20 |

The parameters of the mixtures obtained with the optimal additive percentages are detailed below, by way of summary, in the following Tables A and B:

Table A

| **PBS:L-lactide ratio of CPB** | **1:2** |
|---|---|
| % most optimal CPB | 20 - 30 |
| Crystallization temperature $T_{c-1}$ (°C) | 86 - 88 |
| Melting temperature $T_{m-1}$ (°C) | 105 |
| Melting temperature $T_{m-2}$ (°C) | 115 |
| Degradation onset temperature $T_{0-1}$ (°C) | 295 - 305 |
| Degradation onset temperature $T_{0-2}$ (°C) | 387 - 389 |
| Maximum degradation temperature $T_{max-1}$(°C) | 317 - 352 |
| Maximum degradation temperature $T_{max-2}$ (°C) | 415 - 417 |
| OTR ($cm^3/m^2 \cdot day$) (23 °C, 50% HR) | 23.1 - 24.4 |
| WVTR ($g/m^2 \cdot day$) (38 °C, 90 % HR) | 17.4 - 18.8 |
| Elongation at break (%) | 216 - 219 |
| Young's modulus (GPa) | 0.71 - 0.74 |

Table B

| **PBS:L-lactide ratio of CPB** | **1:3** |
|---|---|
| % most optimal CPB | 20 - 30 |
| Crystallization temperature $T_{c-1}$ (°C) | 85 - 87 |
| Melting temperature $T_{m-1}$ (°C) | 115 |
| Melting temperature $T_{m-2}$ (°C) | 105 |
| Degradation onset temperature $T_{0-1}$ (°C) | 279 - 288 |
| Degradation onset temperature $T_{0-2}$ (°C) | 385 - 387 |
| Maximum degradation temperature $T_{max-1}$(°C) | 306 - 314 |
| Maximum degradation temperature $T_{max-2}$ (°C) | 415 - 416 |

(continued)

| PBS:L-lactide ratio of CPB | 1:3 |
|---|---|
| OTR ($cm^3/m^2\cdot day$) (23 °C, 50% HR) | 24 |
| WVTR ($g/m^2\cdot day$) (38 °C, 90 % HR) | 18 |
| Elongation at break (%) | 190 - 195 |
| Young's modulus (GPa) | 0.77 - 0.81 |

Based on this Example 2, it can be concluded that the copolymer that confers the best properties is CPB 1 (or PBScoPLLA_R12), synthesized with a PBS:L-lactide ratio of 1:2, since in all cases the elongation at break improves. Although Young's modulus is reduced with respect to the matrix, the three samples processed with copolymer give similar values.

Barrier properties have been analyzed based on the oxygen and water vapor transmission rate (OTR and WVTR). All PBS composite formulations have experienced an improvement in these properties, obtaining the best result of both with 30% CPB 1 (or PBScoPLLA_R12), reaching more than 32 and 23%, respectively.

Based on these results, it is concluded that the copolymer that has the most positive effect on the PBS matrix is the one synthesized with a PBS:L-lactide ratio of 1:2, especially when added at 30%, although its effect is already noticeable at 10 and 20%. Nevertheless, the copolymer synthesized with the PBS:L-lactide ratio of 1:3 has not been discarded, since the properties obtained by introducing it into the bioPBS matrix, especially regarding the barrier, are better than those of the pure matrix. The percentages that have given the greatest degree of improvement are 20 and 30%.

Example 3. Preparation of PLLA matrices with PLLA-b-PBS-b-PLLA triblock copolymer additive

Following the same scheme as in Example 2, a PLA polymeric matrix was mixed with the PBScoPLLA_R11 triblock copolymer (also referred to as CPB 2)

The characteristics and properties of PLA are illustrated below:

PLA LX175 as a polymeric matrix used in the development of formulations. PLA LX175 is poly-L-lactic acid (PLLA) with a degree of purity (L isomer of the acid) of 96% by weight of the PLA polymer composition.

Density 1.24 g/cm3

Melt flow rate 3 g/10 min

Melting temperature 155 °C

Young's modulus 3200 MPa

Elongation at break <3%

The following Table 18 shows the weight % of added triblock copolymer and PLA matrix.

Table 18:

| Polymeric matrix grade | Code | CPB2 | %CPB added |
|---|---|---|---|
| LX175 PLA | PLA (ref) | - | - |
| | 90PLA/10CPB 2 | PBScoPLA (1:3) or CPB 2 | 10 |
| | 80PLA/20CPB 2 | PBScoPLA (1:3) or CPB 2 | 20 |
| | 70PLA/30CPB 2 | PBScoPLA (1:3) or CPB 2 | 30 |

The laboratory-scale processing conditions (extrusion+injection) to obtain PLA/CPB2 composites are indicated in Table 19.

Table 19.

| Polymeric matrix grade | CPB | Temperature profile | Residence time | Injection temperature | Mold temperature |
|---|---|---|---|---|---|
| LX175 PLA | CPB 2 | 190-195-200 °C | 3 minutes | 195 °C | 40 °C |

The thermal properties (DSC and TGA analysis) were carried out as detailed in Example 2 and are illustrated in Table 20.

Table 20. Thermal properties. DSC and TGA analysis

| Reference | $T_g$ (°C) | $T_{cc}$ (°C) | $T_{m,1}$ (°C) | $T_{m,2}$ (°C) |
|---|---|---|---|---|
| PLA | 61 | 110 | 156 | |
| 90PLA/10CPB 2 | 52 | 108 | 156 | |
| 80PLA/20CPB 2 | 49 | 100 | 146 | 155 |
| 70PLA/30CPB 2 | 46 | | 143 | 155 |

The data in this Table 20 show that in PLA compositions with the triblock copolymer additive, there was a decrease in the glass transition temperature, due to greater chain mobility promoted by the presence of PBS segments (plasticizing effect of CPB2).

Table 21 illustrates the degradation onset temperatures and the maximum degradation temperature.

Table 21

| Reference | $T_0$ (°C) | $T_{max, I}$ (°C) | $T_{max, II}$ (°C) |
|---|---|---|---|
| PLA | 338 | 369 | - |
| 90PLA/10CPB 2 | 330 | 366 | - |
| 80PLA/20CPB 2 | 326 | 358 | - |
| 70PLA/30CPB 2 | 302 | 340 | 380 |

A slight decrease in the degradation onset temperature is observed due to the plasticizing effect of the additive. In any case, the formulations exhibited high thermal stability.

T0: degradation onset temperature of the formulations, calculated by TGA at 5% mass loss.

Tmax, I corresponds to the maximum degradation temperature associated with PLA.

Tmax, II corresponds to the decomposition temperature of the PBS component in CPB2.

Lastly, the mechanical properties of the PLA compositions with the triblock copolymer additive were also evaluated. Young's modulus, tensile stress and elongation at break analyses were carried out as indicated for Example 2. The results obtained are illustrated in Table 22.

Table 22. Mechanical properties

| Reference | Young's modulus (MPa) | Tensile stress (MPa) | Elongation at break (%) |
|---|---|---|---|
| PLA | 3000 | 69 | 2.8 |
| 90PLA/10CPB 2 | 2900 | 65 | 6.5 |
| 80PLA/20CPB 2 | 2850 | 56 | 11.4 |
| 70PLA/30CPB 2 | 2900 | 55 | 13.2 |

An increase in elongation at break was observed with the addition of the triblock copolymer (increase in material ductility = improvement in mechanical properties of the PLA matrix)

CITATION LIST

- Zhang et al., "Copolymer P(BS-co-LA) Enhanced Compatibility of PBS/PLA Composite", Journal of Polymers and the Environment, 2018, doi.org/10.1007/s10924-018-1180-0.
- Rudin, A. et al. "The elements of polymer science and engineering (third edition)". Chapter 1- introductory concepts and definitions. Academic press, 2013, pages 1-62.

## Claims

1. A triblock copolymer of poly-L-lactide with polybutylene succinate of formula PLLA-b-PBS-b-PLLA, **characterized in that** it has a number average molecular weight (Mn) of 4000 g/mol to 200000 g/mol; and **in that** the PBS block has a number average molecular weight (Mn) of 1500 g/mol to 40000 g/mol; wherein Mn is calculated by gel permeation chromatography (GPC).

2. The triblock copolymer according to claim 1, **characterized in that** it has molecular formula (I)

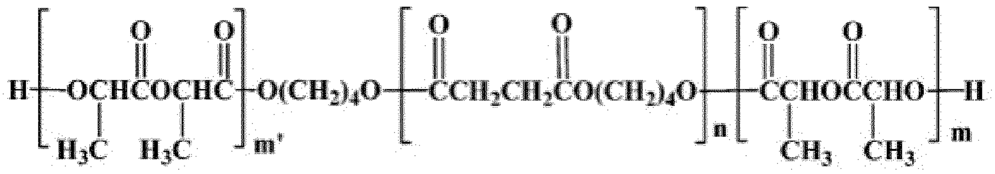

Formula (I);

wherein:

- *m*, and *m'* are independently numbers ranging from 10 to 555, and
- *n* is a number ranging from 9 to 232.

3. The triblock copolymer according to claim 2, **characterized in that** *m* and *m'* are 10 to 555, such that the number average molecular weight (Mn) of each of the poly-L-lactide (PLLA) blocks is 1500 g/mol to 80000 g/mol, measured by gel permeation chromatography (GPC).

4. The triblock copolymer according to any one of claims 2 to 3, **characterized in that** n is from 9 to 232, such that the number average molecular weight (Mn) of the polybutylene succinate block is 1500 g/mol to 40000 g/mol, measured by gel permeation chromatography (GPC).

5. A method for obtaining a triblock copolymer of formula PLLA-b-PBS-b-PLLA as defined in any one of claims 1 to 4, **characterised in that** it comprises the steps of:

(i) mixing in a vessel and in the presence of a metal-based catalyst, L-lactide with a polybutylene succinate (PBS) as a macroinitiator of copolymerization, at a weight ratio of 2:1 to 5:1 of L-lactide:PBS macroinitiator, wherein said PBS macroinitiator is such that it has a number average molecular weight (Mn) of 1500 g/mol to 40000 g/mol measured by gel permeation chromatography, and wherein said catalyst is at a ratio of 0.1% to 0.3% by weight with respect to the L-lactide;
(ii) allowing the mixture to react under stirring at a temperature of 100 °C to 150 °C for up to 20 hours, or for a suitable time to obtain a triblock copolymer with a number average molecular weight (Mn) of 4000 g/mol to 200000 g/mol, wherein Mn is calculated by gel permeation chromatography; and
(iii) drying of the copolymer obtained in step (ii).

6. The method according to claim 5, **characterized in that** the metal-based catalyst is the organometallic compound tin(II) 2-ethylhexanoate ($Sn(Oct)_2$).

7. The method according to any one of claims 5 to 6, **characterized in that** it comprises an additional step of purification of the copolymer obtained in step (ii) and consisting of precipitation of the copolymer.

8. The method according to any one of claims 5 to 7, **characterized in that** the polybutylene succinate (PBS) macroinitiator with a number average molecular weight (Mn) of 1500 g/mol to 40000 g/mol can be obtained by a method comprising the steps of:

(i) esterification of succinic acid (SA) and 1,4-butanediol (BDO) mixed at a molar ratio of 1:1.2 (SA:BDO) for 2.5 to 4.0 hours at a temperature of 175 °C to 225 °C;
(ii) polycondensation of the ester of step (i) in the presence of a catalyst selected from an organometallic catalyst, a Bronsted acid, a Lewis acid and Lewis acid oxides, at a temperature comprised between 200 °C-240 °C and for a time of 3.5-4.5 hours, to obtain a polybutylene succinate (PBS) copolymer with a number average molecular weight (Mn) of 1500 g/mol to 40000 g/mol;
(iii) drying of the copolymer obtained in step (ii).

**9.** The method according to claim 8, **characterized in that** the polybutylene succinate (PBS) obtained in step (ii) is purified by precipitation.

**10.** A composition **characterized in that** it comprises one or more PLLA-b-PBS-b-PLLA triblock copolymers as defined in any one of claims 1 to 4.

**11.** The composition according to claim 10, **characterized in that** it is selected from the group consisting of:

- a composition A, comprising:

  (a) the PLLA-b-PBS-b-PLLA triblock copolymer as defined in any one of claims 1 to 4; and
  (b) one or more vehicles or excipients;

- a composition B, comprising:

  (a) the PLLA-b-PBS-b-PLLA triblock copolymer as defined in any one of claims 1 to 4; and
  (b) one or more polymers;

- a composition C, comprising:

  (a) the PLLA-b-PBS-b-PLLA triblock copolymer, as defined in any one of claims 1 to 4;
  (b) one or more vehicles or excipients; and
  (c) one or more polymers.

**12.** The composition according to claim 11, **characterized in that** one or more polymers are selected from the group consisting of polylactic acid homopolymers, polycaprolactone homopolymers, polybutylene succinate homopolymers, polybutylene succinate adipate homopolymers, polyhydroxybutyrate homopolymers, polyhydroxybutyrate-valerate homopolymers, and combinations thereof.

**13.** The composition according to claim 12, **characterized in that** the polymer is polybutylene succinate (PBS) homopolymer.

**14.** The composition according to claim 12, **characterized in that** the polymer is polylactic acid (PLA) homopolymer.

**15.** The composition according to any of claims 10 to 14, **characterized in that** the weight percentage of the PLLA-b-PBS-b-PLLA triblock copolymer with respect to the total weight of the composition is 2% to 98%.

**16.** The copolymer according to any one of claims 1 to 4, or the polymeric composition according to any one of claims 10 to 15, **characterized in that** they are in the form of pellets.

**17.** Use of the triblock copolymer as defined in any of claims 1 to 4, as an additive in a polymeric composition comprising polybutylene succinate (PBS) homopolymers.

**18.** Use of the triblock copolymer as defined in any of claims 1 to 4, as an additive in a polymeric composition comprising polylactic acid (PLA) homopolymers.

**19.** An item comprising the copolymer according to any one of claims 1 to 4, or the composition according to any one

of claims 10 to 15.

**20.** The item according to claim 19, **characterized in that** it comprises a composition as defined in any one of claims 10 to 15 and selected from the group consisting of a composition B and a composition C; and one or more excipients or vehicles.

**21.** The item according to any one of claims 19 to 20, **characterized in that** it is a packaging item; particularly a food packaging item.

**22.** Use of the copolymer according to any one of claims 1 to 4, or of the polymeric composition according to any of claims 10 to 15, for the manufacture of an item.

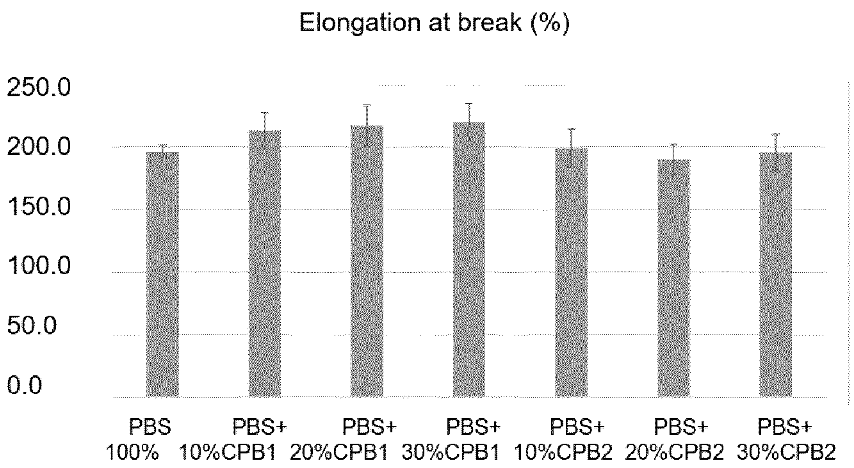
Elongation at break (%)
250.0
200.0
150.0
100.0
50.0
0.0
PBS 100%
PBS+ 10%CPB1
PBS+ 20%CPB1
PBS+ 30%CPB1
PBS+ 10%CPB2
PBS+ 20%CPB2
PBS+ 30%CPB2

**FIG. 1**

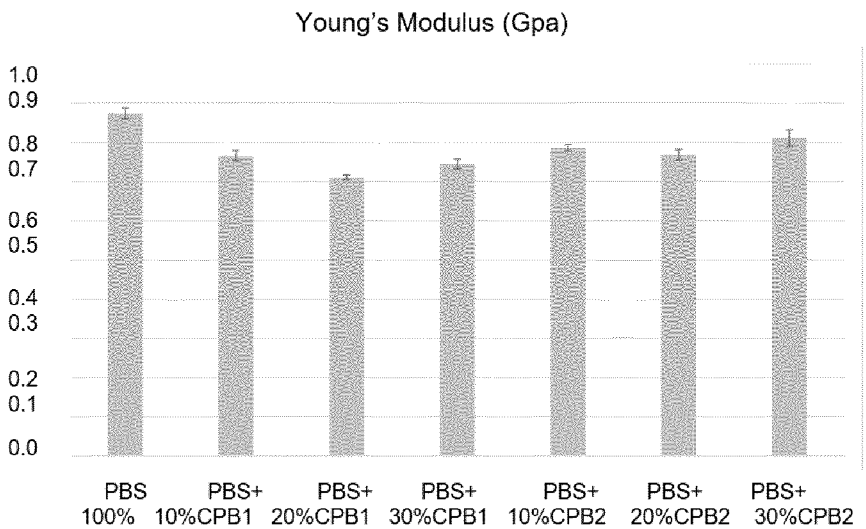
Young's Modulus (Gpa)
1.0
0.9
0.8
0.7
0.6
0.5
0.4
0.3
0.2
0.1
0.0
PBS 100%
PBS+ 10%CPB1
PBS+ 20%CPB1
PBS+ 30%CPB1
PBS+ 10%CPB2
PBS+ 20%CPB2
PBS+ 30%CPB2

**FIG. 2**

| INTERNATIONAL SEARCH REPORT | International application No. PCT/ES2022/070377 |
|---|---|

A. CLASSIFICATION OF SUBJECT MATTER

See extra sheet

According to International Patent Classification (IPC) or to both national classification and IPC

B. FIELDS SEARCHED

Minimum documentation searched (classification system followed by classification symbols)
C08G, C08L

Documentation searched other than minimum documentation to the extent that such documents are included in the fields searched

Electronic data base consulted during the international search (name of data base and, where practicable, search terms used)

EPODOC, INVENES, WPI. TXT-DB. NPL, XPESP, BIOSIS, CAS.

C. DOCUMENTS CONSIDERED TO BE RELEVANT

| Category* | Citation of document, with indication, where appropriate, of the relevant passages | Relevant to claim No. |
|---|---|---|
| X | SUPTHANYAKUL, R. et al. "Poly(L-lactide-b-butylene succinate-b-L-lactide) triblock copolymer: A multi-functional additive for PLA/PBS blend with a key performance on film clarity". Polymer Degradation And Stability, 2017, Vol. 142, pages 160-168. See abstract; table 1; experimental. | 1-4, 10-22 |
| X | BA CHAOYI et al. "Syntheses and physical characterization of new aliphatic triblock poly(L-lactide-b-butylene succinate-b-L-lactide) s bearing soft and hard biodegradable building blocks". Biomacromolecules November-december 2003, 31/10/2003, Vol. 4, Nº 6, pages 1827-1834, ISSN 1525-7797 (ISSN print). See abstract; scheme 1; experimental; results; tables 1 and 2. | 1-9 |

☒ Further documents are listed in the continuation of Box C. ☒ See patent family annex.

* Special categories of cited documents:
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure use, exhibition, or other means.
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other documents , such combination being obvious to a person skilled in the art
"&" document member of the same patent family

| Date of the actual completion of the international search 20/07/2022 | Date of mailing of the international search report **(18/08/2022)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>N. Martín Laso<br><br>Telephone No. 91 3493278 |

Form PCT/ISA/210 (second sheet) (January 2015)

## INTERNATIONAL SEARCH REPORT

International application No.
PCT/ES2022/070377

C (continuation). DOCUMENTS CONSIDERED TO BE RELEVANT

| Category * | Citation of documents, with indication, where appropriate, of the relevant passages | Relevant to claim No. |
|---|---|---|
| A | BHATIA AMITA et al. "Compatibility of biodegradable poly(lactic acid) (PLA) and poly(butylene succinate) (PBS) blends for packaging application". Korea - Australia Rheology Journal, 20070101 Korean Society Of Rheology, Seoul, Kr., 01/01/2007, Vol. 19, Nº 3, pages 125 – 13. See abstract. | 1-22 |
| A | WO 2016174665 A1 (TIPA CORP LTD) 03/11/2016, page 2, line 28 - page 3, line 30; page15, line 23 - page 17, line 25. | 1-22 |
| A | WO 2014202481 A1 (TOTAL RES & TECHNOLOGY FELUY) 24/12/2014, page 2, lines 10-30; page 15, line 33 - page 16, line 16. | 1-22 |

Form PCT/ISA/210 (continuation of second sheet) (January 2015)

## INTERNATIONAL SEARCH REPORT

Information on patent family members

International application No.
PCT/ES2022/070377

| Patent document cited in the search report | Publication date | Patent family member(s) | Publication date |
|---|---|---|---|
| WO2016174665 A1 | 03.11.2016 | GB2537879 A | 02.11.2016 |
| WO2014202481 A1 | 24.12.2014 | US2019194450 A1 | 27.06.2019 |
| | | US10982089 B2 | 20.04.2021 |
| | | JP2016524645 A | 18.08.2016 |
| | | JP6538659B B2 | 03.07.2019 |
| | | US2016152824 A1 | 02.06.2016 |
| | | US10273356 B2 | 30.04.2019 |
| | | KR20160021233 A | 24.02.2016 |
| | | KR102237635B B1 | 12.04.2021 |
| | | CN105324427 A | 10.02.2016 |
| | | EP3010972 A1 | 27.04.2016 |

Form PCT/ISA/210 (patent family annex) (January 2015)

# INTERNATIONAL SEARCH REPORT

International application No.

PCT/ES2022/070377

CLASSIFICATION OF SUBJECT MATTER

***C08G63/08*** (2006.01)
***C08G63/81*** (2006.01)
***C08L67/02*** (2006.01)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- ES P202130557


### Non-patent literature cited in the description


- **ZHANG et al.** Copolymer P(BS-co-LA) Enhanced Compatibility of PBS/PLA Composite. *Journal of Polymers and the Environment,* 2018
- The elements of polymer science and engineering. **RUDIN, A. et al.** introductory concepts and definitions. Academic press, 2013, 1-62
- **H. QIAN ; J. BEI ; S. WANG.** Synthesis, characterization and degradation of ABA block copolymer of L-lactide and ε-caprolactone. *Polymer degradation and stability,* 2000, vol. 68, 423-429
- The elements of polymer science and engineering. **RUDIN, A. et al.** introductory concepts and definitions. Academic press, 2013, 1-62